# FASCICULE DE BREVET EUROPEEN

(11) **EP 0 404 001 B1**
(45) Date de publication et mention de la délivrance du brevet: **21.09.1994**
(21) Numéro de dépôt: 90111424.9
(22) Date de dépôt: 18.06.1990
(51) Int. Cl.: H04Q 1/50, H04M 15/28

(54) **Détecteur de signalisations, du type taxe téléphonique, notamment pour joncteur téléphonique**
Signalisierungsdetektor für Gebührensignalisierung für eine Telefonverbindungsleitung
Signalisation detector, for metering type signals, for a telephone trunk

(30) Priorité: 19.06.1989 FR 8908118
(43) Date de publication de la demande: 27.12.1990
(73) Titulaire: ALCATEL BUSINESS SYSTEMS, F-75008 Paris (FR)
(72) Inventeur: Bonvallet, André, F-92600 Asnières (FR); Girard, Robert, F-92700 Colombes (FR); Canonne, Michel, F-95580 Margency (FR)
(74) Mandataire: Weinmiller, Jürgen

(56) Documents cités:
- EP-A- 0 279 025
- FR-A- 2 551 604
- GB-A- 2 005 111

## Description

L'invention concerne un détecteur de signalisations selon le préambule de la revendication 1. Un tel détecteur est connu, voir par exemple EP-A-0 279 025.

Les joncteurs de ligne réseau sont des équipements assurant le raccordement de l'autocommutateur ou du système d'intercommunication d'une installation téléphonique, de type privé, à un central de rattachement appartenant usuellement à un réseau téléphonique, de manière à permettre la communication des postes ou terminaux téléphoniques rattachés à l'installation privée considérée avec ceux qui sont reliés au réseau sans être rattachés à cette installation privée.

Actuellement un grand nombre de lignes réseau sont encore de type analogique et assurent la transmission des signaux de parole sous forme analogique par l'intermédiaire de deux fils dans une bande de fréquences audibles comprises entre trois cents et trois mille quatre cent hertz.

Les deux fils de ligne sont aussi exploités pour transmettre des signalisations par exemple par modification d'impédance ou sous forme de tension, de courant ou encore d'impulsions à fréquences déterminées, comme le sont classiquement les impulsions de taxation téléphoniques

Or les centraux téléphoniques de type privé, actuels, tendent à assurer le plus souvent une commutation de type temporel qui conduit au codage des signaux de parole sous forme numérique et qui est bien adaptée à la transmission simultanée de signaux de voix et/ou de données par les mêmes supports selon les besoins présents des utilisateurs. Il est donc nécessaire de convertir les impulsions de taxation fournies sous forme analogique en données numériques, le plus souvent dès leur réception par l'installation privée, au niveau des joncteurs qui les transmettent.

Le détecteur selon le document cité n'est capable que de détecter les signalisations transmises à fréquence élevée en mode différentiel. Par contre, le document GB-A-2 005 111 décrit un récepteur d'impulsions de taxation comportant deux détecteurs, l'un étant susceptible de détecter les signalisations en mode commun et de très basse fréquence. Les deux détecteurs sont réunis par une porte OU.

L'invention a pour but de proposer un détecteur permettant de détecter à la fois les signaux en mode différentiel et ceux en mode commun sans pour autant nécessiter deux détecteurs séparés.

Ce but est atteint par le détecteur tel qu'il est défini dans la revendication 1. En ce qui concerne des exemples préférés de mise en oeuvre de l'invention, référence est faite aux revendications dépendantes.

L'invention sera décrite ci-après plus en détail à l'aide des dessins annexés.

La figure 1 présente un schéma de principe d'un détecteur de taxes selon l'invention.

La figure 2 présente un exemple de réalisation du détecteur de taxes schématisé en figure 1.

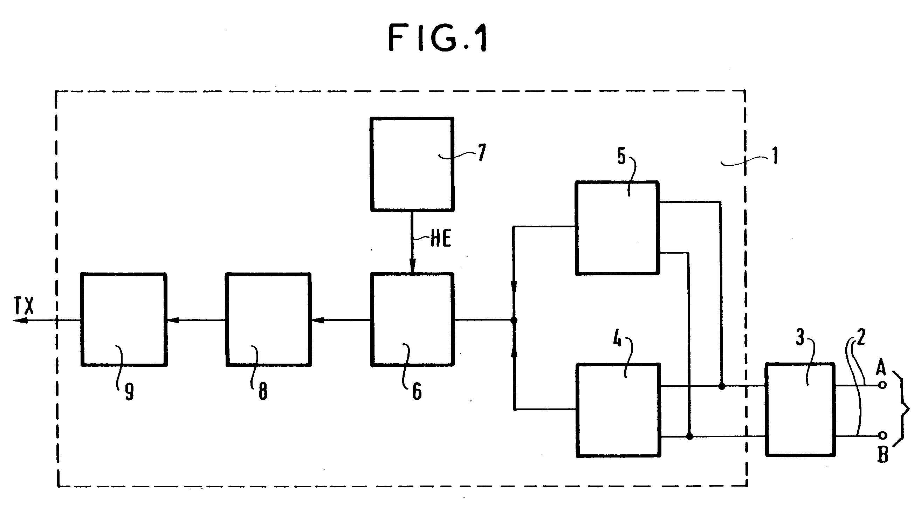

Le détecteur de taxes 1 schématiquement présenté en figure 1, est destiné à capter les impulsions de taxation transmises sur une ligne téléphonique 2 depuis le central de rattachement où aboutit cette ligne 2, à cet effet, il est relié aux deux fils A, B de ladite ligne, via un classique dispositif de protection 3. Ce dernier assure une protection contre les surtensions par exemple à l'aide d'une diode antisurtension, en parallèle entre les fils de ligne 2 , et contre les parasites du type radio-fréquence au moyen de condensateurs et de circuits selfiques simples, selon un agencement classique en la matière, non représenté ici car sans rapport direct avec l'invention. Le détecteur de taxe 1 comporte un filtre d'entrée 4, moyennement sélectif, centré sur la fréquence Ft du signal "très basse fréquence" de taxe classiquement transmis en différentiel par le central de rattachement, via les deux fils A, B de la ligne 2, généralement il comporte aussi un transmetteur 5 d'impulsions de taxation alternativement fournies en extrèmement basse fréquence et en mode commun sur les mêmes fils de ligne par le central de rattachement. Classiquement les signaux impulsionnels transmis en mode différentiel sont de fréquence Ft égale à 12 ou 16 kHz, alors que ceux transmis en mode commun sont de fréquence 50Hz.

Le transmetteur d'impulsions 5 est par exemple constitué au moyen de deux résistances, égales, reliées d'une part chacune à l'un des fils A, B de la ligne téléphonique 2, via deux condensateurs 40 et 41, égaux, d'autre part entre elles au niveau d'un point commun par l'intermédiaire duquel elles sont reliées à une entrée d'un échantillonneur 6. La sortie du filtre d'entrée 4 est également reliée à l'entrée de l'échantillonneur 6 qui reçoit un signal d'horloge HE d'une horloge 7, ici interne au détecteur de taxes 1.

La fréquence du signal d'horloge HE servant à l'échantillonage des signaux fournis par le filtre 4 ou par l'intermédiaire du transmetteur d'impulsions 5 est établie à une valeur FE choisie égale à Ft+V+ε , V étant égal à la variation de fréquence admise à l'émission sur la fréquence Ft et ε la valeur de la fréquence image de Ft+V. Ainsi dans une forme de réalisation où la fréquence Ft des signaux est de 12 kHz, la fréquence FE choisie est par exemple de 12170 Hz, la valeur de ε étant de 70 Hz, soit une valeur suffisamment haute pour être détectée en un temps relativement court..

L'échantillonneur fournit donc un signal de sortie à la fréquence image V+ε, soit dans l'exemple proposé à la fréquence de 170Hz, d'où la fréquence incidente Ft est pratiquement exclue.

Le signal de fréquence 50Hz alternativement fourni par le transmetteur d'impulsions 5 n'est pratiquement pas atténué par l'échantillonnage à la fréquence FE et se retrouve donc en sortie de l'échantillonneur 6.

Un filtre passe-bas 8 est placé en sortie de l'échantillonneur 6, il est choisi passant pour une bande égale à 2V+ε pour transmettre tant les signaux à fréquence image V+ε que ceux à fréquence 50 Hz; ce filtre n'a donc pas besoin d'être très sélectif dans la mesure où les différences entre la fréquence à détecter et les fréquences à éliminer sont beaucoup plus significatives à même niveau pour les fréquences basses en sortie d'échantillonneur 6 que pour les fréquences moyennes présentées sur les fils de ligne téléphonique 2 et en sortie du filtre d'entrée 4.

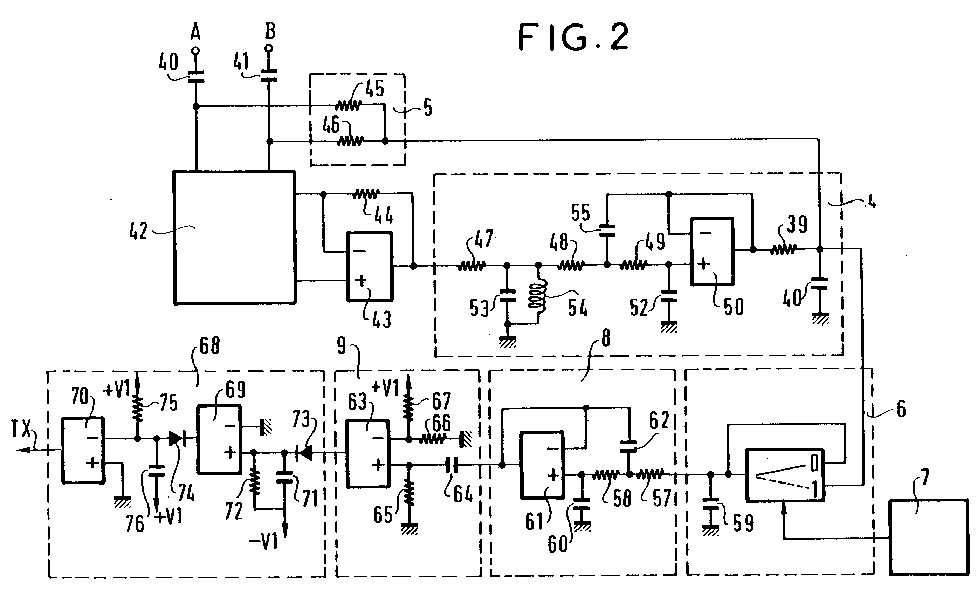

Un simple détecteur de niveau 9 relié en sortie du filtre passe-bas 8 suffit pour déterminer la présence ou non d'un signal, situé dans la bande passante de ce filtre et réputé correspondre de ce fait à un signal caractéristique de taxation que le détecteur 9 traduit par un signal logique binaire TX au profit de l'unité de commande. L'exemple de détecteur de taxes 1 présenté en figure 2 est supposé raccordé aux fils A, B d'une ligne télephonique 2 en aval du dispositif de protection 3 d'un joncteur qui le comporte, comme indiqué précédemment, et qui n'est pas représenté plus avant.

Ce détecteur 1 est relié par deux condensateurs 40 et 41 d'élimination de composante continue aux deux fils de ligne qui prolongent les fils de ligne 2 dans le joncteur. Un montage atténuateur 42, non décrit ici car classique et non caractéristique de l'invention, est relié aux fils A, B via les condensateurs 40 et 41, il attaque le filtre d'entrée 4, via un amplificateur 43 dont les deux entrées sont commandées depuis les fils A, B et dont la sortie est classiquement rebouclée sur l'entrée inverseuse, via une résistance 44.

Le transmetteur d'impulsions 5 est composé de deux résistances 45 et 46 qui sont reliées d'une part entre elles à une de leurs extrémités et d'autre part chacune à l'un des fils A, B, via l'un des condensateurs 40, 41.

Le filtre d'entrée 4 centré sur la fréquence Ft est ici composé de trois résistances 47, 48 et 49 en série en amont de l'entrée non-inverseuse d'un amplificateur opérationnel 50, qui est de plus reliée au potentiel de masse par un condensateur 52. Le point commun aux résistances 47 et 48 est relié au potentiel de masse par un circuit à condensateur 53 et inductance 54 en parallèle, la sortie de l'amplificateur 50 est ramenée d'une part sur son entrée inverseuse, d'autre part au point commun aux résistances 48 et 49, via un condensateur 55. Une résistance 39 placée en sortie de l'amplificateur 50 est reliée au point commun aux résistances 45, 46 du transmetteur d'impulsions 5 de manière que l'entrée de signal à traiter de l'échantillonneur 6 qui est reliée à ce point commun puisse être alternativement attaquée soit par les impulsions transmises en mode différentiel par le filtre 4, soit les impulsions transmises en mode commun par le transmetteur 5.

L'échantillonneur 6 reçoit un signal d'échantillonnage que lui fournit l'horloge 7, ce signal est par exemple de fréquence FE égale à 12170 Hz comme indiqué plus haut, si les fréquences des impulsions de taxe susceptibles d'être reçues sont soit de 12kHz, soit de 50Hz.

Le signal échantillonné obtenu qui est classiquement stocké dans un condensateur 59, est aussi appliqué en entrée d'une résistance d'entrée 57 du filtre passe-bas 8. Ce filtre 8 dont la bande est de l'ordre de 2V+ε, comme indiqué plus haut, comporte essentiellement une cellule formée par la resistance 57 en série avec une résistance 58 entre les deux condensateurs 59 et 60 connectés chacun au potentiel de masse, cette cellule attaque l'entrée non-inverseuse d'un amplificateur opérationnel 61.

La sortie de cet amplificateur 61, qui est classiquement rebouclée d'une part sur son entrée inverseuse et d'autre part au point commun entre résistances 57 et 58 par un condensateur 62, attaque le détecteur de niveau 9.

Ce dernier est organisé autour d'un amplificateur opérationnel 63 recevant le signal de sortie de l'amplificateur 61 sur son entrée non-inverseuse par l'intermédiaire d'un circuit composé d'un condensateur 64, une grande résistance 65 relie classiquement cette entrée non-inverseuse au potential de masse, alors que l'entrée inverseuse est relié au point commun d'un diviseur à résistances 66, 67 connectées entre masse et potentiel d'alimentation +V1.

Le signal de sortie de l'amplificateur 63 est ensuite appliqué par un montage de mise en forme 68 de transmission des impulsions de taxe sous forme binaire à la liaison de transmission TX en vue d'être transmis vers le circuit de signalisation desservant le joncteur 1.

Ce montage comporte par exemple, deux amplificateurs opérationnels 69, 70 en série, le premier a une entrée inverseuse au potentiel de masse et une entrée non-inverseuse reliée d'une part à un potentiel négatif -V1 par un circuit à condensateur 71 et résistance 72 en parallèle et d'aure part à la sortie de l'amplificateur 63 par une diode 73 en direct. Une diode 74 en inverse relie la sortie de l'amplificateur 69 à l'entrée inverseuse de l'amplificateur 70 qui est reliée d'une part par un condensateur 76, d'autre part par une résistance 75 au potential +V1, alors que l'entrée non-inverseuse de cet amplificateur 70 est reliée au potentiel de masse.

## Revendications

1. Détecteur de signalisations, du type taxe téléphonique, émises sous forme d'impulsions, périodiques, obtenues à partir de signaux alternatifs à fréquences déterminées qui sont transmis sous forme analogique par l'intermédiaire d'une ligne (2) à deux fils (A, B), notamment pour un joncteur de ligne réseau analogique d'une installation téléphonique de type privé, par l'intermédiaire d'un circuit de protection (3), comportant un filtre d'entrée (4), laissant passer lesdits signaux alternatifs à la fréquence (Ft) des signalisations attendues qui sont transmises en différentiel sur les fils de ligne auxquelles est relié ce filtre, éventuellement au travers du dispositif de protection, un échantillonneur (6) connecté d'une part à la sortie du filtre d'entrée (4) et d'autre à la sortie d'une horloge (7) fournissant un signal (HE) dont la fréquence (FE) est voisine de la valeur (Ft), de manière à fournir en sortie un signal échantillonné caractéristique correspondant à la différence entre (FE) et (Ft) lorsqu'une signalisation est reçue, ledit échantillonnage étant suivi d'un second filtre (8) dans la bande passante duquel le signal caractéristique est inclus, ainsi qu'un détecteur de niveau (9) apte à fournir un signal numérique, de type binaire, suivant la présence ou non d'un signal caractéristique d'une signalisation reçue de niveau supérieur à un seuil prédéterminé en sortie du filtre (8) succédant audit échantillonneur, caractérisé en ce que le filtre d'entrée (4) est un filtre moyennement sélectif centré sur la fréquence (Ft) des signalisations attendues, que le filtre (8) en sortie de l'échantillonneur est un filtre passe-bas conçu pour laisser passer tant le signal caractéristique que les impulsions transmises en mode commun, et en ce qu'il comporte de plus un transmetteur d'impulsions (5) pour les signalisations transmises en mode commun sur les fils de ligne, composé de deux résistances (45 et 46) égales, qui sont reliées d'une part entre elles à une de leurs extrémités et d'autre part chacune à l'un des fils (A, B) via deux condensateurs (40, 41), et en ce qu'il comporte une résistance (39) placée en sortie du filtre d'entrée et reliée au point commun desdites résistances de manière à ce que ce point commun puisse être alternativement attaqué soit par les impulsions transmises en mode différentiel par le filtre d'entrée (4), soit par les impulsions transmises en mode commun par le transmetteur (5).

2. Détecteur de signalisations, selon la revendication 1, caractérisé en ce qu'il comporte un filtre d'entrée (4) doté d'un amplificateur opérationnel (50) dont l'entrée non-inverseuse, reliée au potentiel de masse par un condensateur (52) est attaquée au travers de trois résistances (47, 48 et 49) en série, le point commun aux deux premières résistances (47 et 48) étant relié est relié au potentiel de masse par un circuit à condensateur (53) et inductance (54) en parallèle, la sortie de cet amplificateur (50) étant ramenée d'une part sur son entrée inverseuse, d'autre part au point commun aux deux dernières résistances (48 et 49), via un condensateur (55).

3. Détecteur de signalisations selon l'une des revendications précédentes, caractérisé en ce que le filtre passe-bas (8) comporte une cellule formée par une résistance (57) en série avec une résistance (58) entre deux condensateurs (59 et 60) connectés chacun au potentiel de masse, cette cellule attaquant l'entrée non-inverseuse d'un amplificateur opérationnel (61) dont la sortie est rebouclée d'une part sur son entrée inverseuse et d'autre part au point commun entre les résistances (57 et 58) par un condensateur (62).

## Patentansprüche

1. Signalisationsdetektor für Telefongebührenimpulse, die in Form periodischer Impulse ausgehend von alternativen Signalen bestimmter Frequenzen erhalten werden, die in analoger Form über eine Leitung (2) aus zwei Drähten (A, B) übertragen werden, insbesondere für einen Leitungsverbinder zum Anschluß eines analogen Netzes an eine Nebenstellentelefonanlage über eine Schutzschaltung (3), wobei der Detektor ein Eingangsfilter (4), das die alternativen Signale mit der Frequenz (Ft) der erwartenden Signalisationen durchläßt, die im Differentialmodus auf den Drähten der Leitung, an die dieses Filter angeschlossen ist, übertragen werden, gegebenenfalls über die Schutzvorrichtung, und einen Tastkreis (6) aufweist, der einerseits an den Ausgang des Eingangsfilters (4) und andererseits an den Ausgang eines ein Signal (HE) liefernden Taktgebers (7) angeschlossen ist, dessen Frequenz (FE) in der Nähe des Werts (Ft) liegt, so daß am Ausgang des Tastkreises ein charakteristisches getastetes Signal geliefert wird, das der Differenz zwischen (FE) und (Ft) entspricht, wenn eine Signalisation empfangen wird, wobei auf die Tastung ein zweites Filter (8) folgt, in dessen Durchlaßband das charakteristische Signal enthalten ist, sowie ein Pegeldetektor (9), der ein digitales Signal binärer Form liefern kann, je nachdem, ob ein für eine Signalisation charakteristisches Signal mit einem Pegel oberhalb eines vorgegebenen Schwellwerts am Ausgang des Filters (8) hinter dem Tastkreis vorliegt oder nicht, dadurch gekennzeichnet, daß das Eingangsfilter (4) ein nur mäßig selektives Filter ist, das auf die Frequenz (Ft) der erwarteten Signalisationen zentriert ist, daß das Ausgangsfilter (8) des Tastkreises ein Tiefpaßfilter ist, das sowohl das charakteristische Signal, als auch die im Gleichtakt übertragenen Impulse durchläßt, und daß der Detektor außerdem einen Impulsübertrager (5) für die im Gleichtakt auf den Drähten der Leitung übertragenen Signalisationen aufweist, der zwei gleiche Widerstände (45 und 46) besitzt die einerseits miteinander und andererseits je an einen der Drähte (A, B) über je einen Kondensator (40, 41) angeschlossen sind, und daß der Detektor einen Widerstand (39) am Ausgang des Eingangsfilters besitzt, der mit dem gemeinsamen Punkt der erwähnten Widerstände verbunden ist, so daß dieser gemeinsame Punkt alternativ durch die im Differentialmodus über das Eingangsfilter (4) übertragenen Impulse oder durch die im Gleichtakt vom Übertrager (5) übertragenen Impulse angesteuert werden kann.

2. Signalisationsdetektor nach Anspruch 1, dadurch gekennzeichnet, daß er ein Eingangsfilter (4) mit einem Operationsverstärker (50) enthält, dessen positiver, über einen Kondensator (52) mit Masse verbundener Eingang über drei Widerstände (47, 48 und 49) in Reihe angesteuert wird, wobei der gemeinsame Punkt der beiden ersteren Widerstände (47 und 48) über die Parallelschaltung eines Kondensators (53) und einer Induktivität (54) mit Massepotential verbunden ist, während der Ausgang dieses Verstärkers (50) einerseits auf seinen negativen Eingang rückgeschleift und andererseits mit dem gemeinsamen Punkt der beiden letzteren Widerstände (48 und 49) über einen Kondensator (55) verbunden ist.

3. Signalisationsdetektor nach einem der vorherigen Ansprüche, dadurch gekennzeichnet, daß das Tiefpaßfilter (8) eine Zelle bestehend aus einem Widerstand (57) in Reihe mit einem Widerstand (58) zwischen zwei je an Masse liegenden Kondensatoren (59 und 60) enthält und den positiven Eingang eines Operationsverstärkers (61) ansteuert, dessen Ausgang einerseits an den negativen Eingang rückgeschleift und andererseits mit dem gemeinsamen Punkt zwischen den Widerständen (57 und 58) und einem Kondensator (62) angeschlossen ist.

## Claims

1. Detector for telephone charging signalling in the form of periodic pulses derived from alternating current signals at specific frequencies transmitted in analogue form by means of a line (2) comprising two wires (A, B), for example to an analogue subscriber line interface circuit of a private telephone installation connected through a protection circuit (3), comprising an input filter (4) passing said alternating current signals at the frequency (Ft) of the expected signalling transmitted differentially on the line wires to which the filter is connected, optionally through the protection device, a sample and hold circuit (6) connected to the output of the input filter (4) and to the output of a clock (7) supplying a signal (HE) whose frequency (FE) is close to the value (Ft) so as to supply a characteristic sampled output signal representing the difference between (FE) and (Ft) when signalling is received, said sample and hold circuit being followed by a second filter (8) within the band of which the characteristic signal is included, and a level detector (9) adapted to supply a binary digital signal according to whether there is present or not a signal characteristic of signalling received at a level above a predetermined threshold at the output of the filter (8) following said sample and hold circuit characterised in that the input filter (4) is a filter of moderate selectivity centered on the frequency (Ft) of the expected signalling, the filter (8) at the output of the sample and hold circuit is a lowpass filter adapted to pass the characteristic signal and the pulses transmitted in common mode, and in that it further comprises a pulse sender (5) for signalling transmitted in common mode on the line wires comprising two equal-value resistors (45, 46) connected to each other at one end and each connected to one of the wires (A, B) via two capacitors (40, 41), and in that it comprises a resistor (39) connected to the input filter and to the common point of said resistors in such a way that this common point can be alternately driven either by pulses transmitted in differential mode by the filter (4) or by pulses transmitted in common mode by the pulse sender (5).

2. Signalling detector according to claim 1 characterised in that it comprises an input filter (4) including an operational amplifier (50) the non-inverting input of which is earthed by a capacitor (52) and is connected to three resistors (47, 48, and 49) in series, the common point of the first two resistors (47 and 48) being earthed by a circuit comprising a capacitor (53) and an inductor (54) in parallel, the output of the amplifier (50) being connected to its inverting input and to the common point of the last two resistors (48 and 49) via a capacitor (55).

3. Signalling detector according to claim 1 or claim 2 characterised in that the lowpass filter (8) includes a circuit comprising a resistor (57) in series with a resistor (58) between two capacitors (59 and 60) each of which is earthed, this circuit driving the non-inverting input of an operational amplifier (61) whose output is looped to its inverting input and to the common point of the resistors (57 and 58) by a capacitor (62).
